# EUROPEAN PATENT APPLICATION

(11) **EP 3 991 960 A1**
(43) Date of publication of application: **04.05.2022**
(21) Application number: 21202794.0
(22) Date of filing: 15.10.2021
(51) Int. Cl.: B30B 15/02, B30B 15/00, B21D 5/00, B21D 37/00, B29C 33/00, G05B 19/418, B30B 15/26

(54) **PROCESS FOR IMPLEMENTING AN IMPROVED-EFFICIENCY DEFORMATION AND/OR MOULDING PLANT**

(30) Priority: 02.11.2020 IT 202000025990
(71) Applicant: I.M.V. Presse S.R.L., 20852 Villasanta (MB) (IT)
(72) Inventor: GALLI, LORENZO, 20058 VILLASANTA (MB) (IT)
(74) Representative: Franco Martegani S.r.l.

(57) **Abstract**

A process for implementing an improved-efficiency deformation and/or moulding plant wherein the plant provides for the use of a plurality of moulds and/or products (A, B, C, D, etc.), which can be continuously updated; said moulds each providing transition times between two consecutive productions which are in relation to successive types of mould and/or product, the process providing for the following successive steps
- detecting the transition times between two productions (position 50) or times for the passage from a first configuration of the press with a first mould for a first product to a second configuration of the press with a second mould or different version of the first mould, for a second product and insertion in a database (k) and so forth for the plurality of moulds and/or products (A, B, C, D, etc.) to be used in the plant,
- sending to the plant, or alternatively manual data entry, a production plan pre-set by a plant management system (53,54) comprising a specific limited series of moulds and/or products (A, B, C, D, etc.),
- comparing the data relating to said moulds and/or products (A, B, C, D, etc.) and their optimization (position 55) in view of the pre-set plan sent, characterized in that said process provides the following step:
- identifying a production sequence in which the sum of the transition times stored in said database (k) for said plurality of moulds and/or products (A, B, C, D, etc.) is minimized by varying the operational production sequence of the plurality of moulds and/or products (A, B, C, D, etc.) to be used in the plant.

## Description

The present invention relates to a process for implementing an improved-efficiency deformation and/or moulding plant.

In the field of deformation and/or moulding, a deformation and/or moulding plant, in addition to the press, is normally composed of two fundamental characteristic elements:
- the press, in which the mould is inserted, and
- automation for the loading of the material, whether it be in coils or pre-cut formats, discharging of the finished piece and evacuation of waste material.

A multiplicity of moulds can naturally be inserted inside this type of plant, which, when assembled and implemented by the press, deform the material up to the production of different single pieces. Each mould is in fact generally specific for the piece to be produced.

Even in a context of expansion in consumption due to growth in emerging countries, rather than the effect of replacing already saturated markets, there is a strong increase in models.

The increase in models and ever-increasing differentiation, aimed at reaching the most diverse tastes and requirements of the consumer, generates a fractionation of the total numbers in the summation of a multiplicity of variants, sub-models and restyling.

All of this has repercussions on the production world, in which for example, whereas once hundreds of thousands of identical pieces were produced, now an even greater number are produced in absolute terms, and they are now divided into dozens of different pieces which, although exerting the same function, are characterized by structural and aesthetic variants.

The document US 2003/078689 discloses a method and a device for operating a continuous casting and rolling installation, using a computer system configured for generating an initial production plan from a plurality of production orders, for generating a sequence of production orders stored in the production plan, for generating an implementable production plan that takes into account the limitations related to the process to which the installation is subject and optimizing the production plan generated.

In view of these general premises, specifically in the deformation and moulding sector, all of this can be translated into three fundamental aspects:
1) flexibility of the users, who must necessarily have various moulds to be introduced alternately into the same plant in order to be able to optimize their use and obtain a pay-back that justifies the investment,
2) flexibility of the plants, which, in addition to performance, must be able to accept a large amount of moulds and process a considerable dimensional variety of widths and thicknesses of material,
3) as the storage of finished products or raw materials is extremely expensive, and the trend is therefore to reduce warehouses with a more "just-in-time" production, a 360° increase in the efficiency of production-change planning is necessary. In addition to the organization of work, this efficiency also requires equipping the plants with accessories suitable for reducing machine downtime as much as possible due to the increasingly frequent mould changes.

For this last reason, equipment and mould-changing systems are subject to greater attention. This attention is implemented, in addition to those who have to purchase a plant, above all by the constructors, who have studied and are studying increasingly complete and automated systems, aimed at the preparation in "masked" time of the equipment for subsequent production, in addition to the massive use of electronics. Electronics are in fact specifically used for memorizing parameters and automating the system in addition to adjustments of the plant itself, with undoubted advantages both in terms of time and the prevention of human error in the set-up.

The complete installation of these accessories on the one hand and the organizational and production planning on the other, have therefore found a meeting point with the so-called "Industry 4.0". It is specifically thanks to this that, through the company management system, it is possible to plan the production to be sent to the plant, and have feedback from the same. Thanks to these responses, it is also possible to automate further procedures such as, for example, the management of inbound and outbound warehouses, transportation, traceability and accounting.

In participating in the ongoing process described above and in analyzing which further aspects can be improved, it has been realized that there is still an unresolved "connection point" between the plant with all the moulds already inserted or insertable in the same and the production planning.

The general objective of the present invention is to provide a process for implementing a deformation and/or moulding plant capable of solving the above-mentioned drawbacks of the prior art in an extremely simple, economical and particularly functional way.

A further objective of the present invention is to provide a process for implementing a deformation and/or moulding plant which has an improved efficiency with respect to the processes known so far.

Another objective of the present invention is to provide a process for implementing a deformation and/or moulding plant that is capable of having moulding steps or sequences which are such as to reduce production downtime as much as possible, thus improving the overall efficiency of the plant, with cost reduction and an increase in plant availability.

The above-mentioned objectives are achieved by a process for implementing an improved-efficiency deformation and/or moulding plant produced according to independent claim 1 and the following subordinate claims.

The structural and functional characteristics of the present invention and its advantages with respect to the known art will become even more evident from the following description, referring, in some passages, to the enclosed synthetic block diagrams, in order to facilitate the understanding of the method according to the invention itself. In the block diagrams:
- figure 1 shows a general block diagram in which the steps according to the invention used for detecting transition times between two productions or piece and/or mould change are illustrated and summarized;
- figure 2 shows a block diagram illustrating and summarizing the detection system and an example of a database of said transitions detected;
- figures 3 and 3b show tables of a first comparison and optimization example of steps of a process for implementing an improved-efficiency deformation and/or moulding plant according to the invention;
- figures 4 and 4b show tables of a second comparison and optimization example of steps of a process for implementing an improved-efficiency deformation and/or moulding plant according to the invention.

In the following description, for the illustration of the figures, identical reference numbers are used for indicating construction elements having the same function. Furthermore, for the clarity of illustration, some numerical references may not have been repeated in all the figures.

In view of the drawbacks of the current state of the art, it has been observed that many variable parameters are encountered in the management of a moulding plant.

First of all, the plant, for example a press, provides that a plurality of moulds can be and are introduced into the same, for example indicated with A, B, C, D and so forth ...

And a specific plant configuration is required for each of them, in order to manage, for example, the material being introduced, the moulding flow, any possible lubrication of the material, the collection and evacuation of scraps, etc...

It should be noted that some moulds can also produce similar pieces but with some differences, thanks to a simple "version change". That is to say, instead of replacing the entire mould, it is possible to act on one or more elements of the same. The version change in any case generates a transition time as occurs for the complete mould change and is therefore considered as such herein.

It has also been noted that, even in the presence of accessories suitable for preparing the production change in masked time, there are always some procedures that require production downtime in the transition from one configuration to another.

It has also been noted that, although the procedures are different as they are specific for each mould/product, there are similar configurations.

Even the raw material to be processed introduced into a mould (for example a coil with certain characteristics) or the lubricant to be used for said mould and raw material, can for example, in some cases, be the same as those to be used for other moulds.

Not to mention numerous adjustments and settings which, although automated, can prove to be very different operations as they are also related to manual intervention, which by its very nature cannot always have the same times, even if presumably similar.

From this series of findings, it has therefore been noted that, in a nutshell, although each mould and/or product requires a specific system configuration, the transition or passage between different configurations, more or less similar, can require different times that can be acquired during the various implementation steps of the plant.

According to the present invention, it was therefore decided to identify a process for implementing a deformation and/or moulding plant which would have an improved efficiency.

In the first place, for implementing the process and improving the efficiency, the transition times between the different possible configurations of the system must be defined and known.

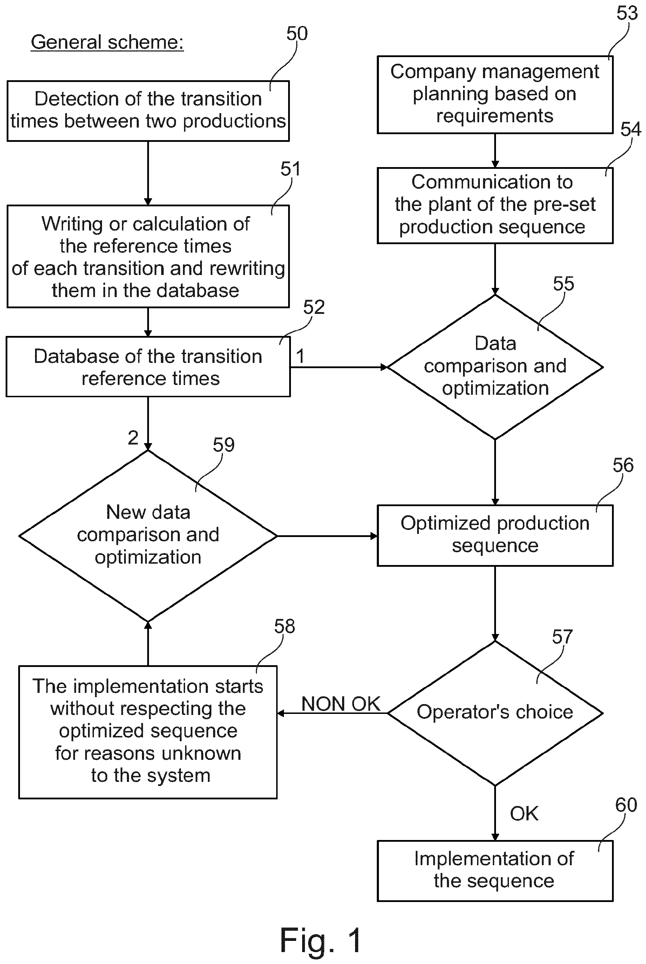

In other words, the transition times between two productions must be measured (position 50 figure 1), i.e. the times for the passage from a first set-up of the press with a first mould for a first product to a second set-up of the press with a second mould for a second product or a different version of the first mould. This is followed by a step in which these transition times must be inserted in a database (position 52 figure 1) of transition times for a plurality of moulds and/or products A, B, C, D, etc., which can be continuously updated for new moulds (position 51 figure 1).

In short therefore, there is a detection of the times necessary for the configuration transit between the different moulds and/or products (for example from A to B, from A to D, from C to A, etc...). This detection is effected automatically by the plant management system, and the data is stored.

Normally, via network or data entry, a pre-set production plan is sent to the plant (which can be called "planning hypothesis" - position 53 in figure 1), possibly including urgency indications for specific products to be carried out and deadlines within which the productions must be effected.

There is in fact a communication to the plant of the preset production sequence (position 54 in figure 1).

It is at this point that a comparison phase is carried out (position 55 in figure 1) between the data present in the reference database (position 52 in figure 1) and the corresponding data of the pre-set planning, obtaining as output the proposal for an optimized production sequence (position 56 in figure 1), which is subjected to the choice of the plant operator (position 57 in figure 1).

If the plant operator agrees with this proposal, he allows (gives the OK for) the operational phase i.e. carrying out the sequence (step 60). If, on the other hand, the plant operator does not agree (NOT OK) for various reasons (which may be unknown or may have suddenly arisen in the plant and/or in the availability of the moulds), an alternative succession of steps is presented. Whenever the plant operator makes a choice that is different from the optimized sequence proposed (position 56 in figure 1), starting from the configuration selected, the system in fact recalculates the sequence, proposing the most convenient sequence for future configurations.

There are in fact steps in which the operator starts the implementation without respecting the optimized sequence for reasons unknown to the system (step 58 of figure 1) followed by a new comparison of the data and optimization (step 59 of figure 1) before returning again to step 56 having identified a new optimized production sequence (step 56 of figure 1).

It has thus been observed how, with a particular algorithm or "artificial intelligence", by analyzing the planning hypothesis and crossing the data with the memorized transition times, the system effects an optimization of the sequence proposing the planning that in practice is more convenient.

It has also been seen that the operator still has the right not to follow the proposed planning even partially for various reasons not previously revealed. Whenever the operator makes a different choice, starting from the configuration selected, the system recalculates the sequence, proposing the most convenient sequence for future configurations. And consequently should the NON-availability of an essential component that is part of a configuration be signalled to the system, (for example for a breakdown), the system will be able to recalculate the sequence excluding the configurations that may not be practicable due to their absence.

An extremely important observation should also be taken into account: the system is constantly "learning", acquiring the transition data, thus improving its experience and therefore the planning quality. If, for example, a certain transition is carried out several times, the system will learn an average time between those detected, and will also be able to report any anomaly if the last implementation has times that differ significantly from its normality.

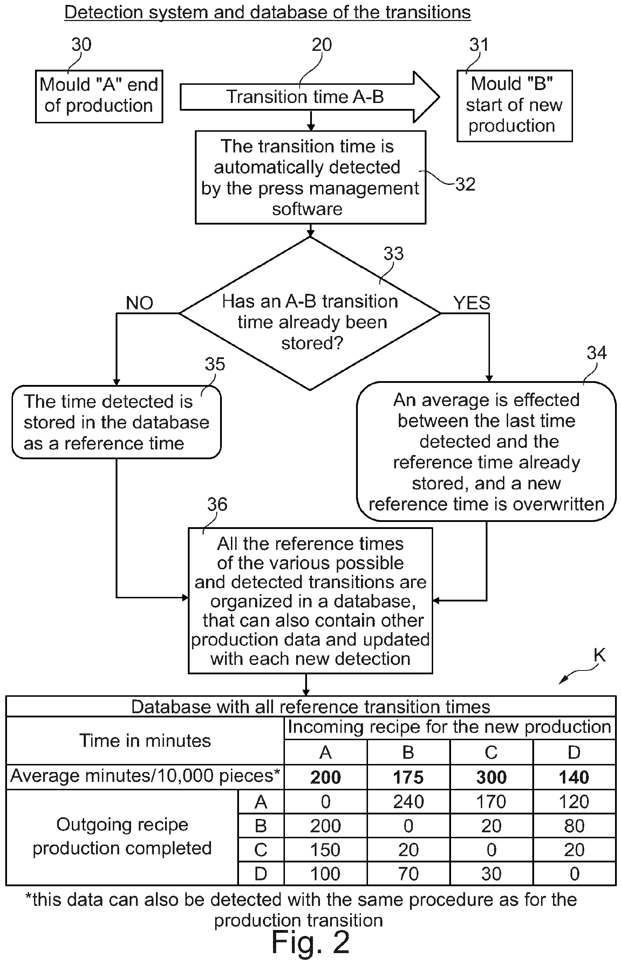

Figure 2 shows a block diagram in which the detection system is illustrated and summarized and a database example of said transitions detected.

The diagram shows how a transition time is achieved by detection. It has been said in fact that, although each mould or each version of it requires a specific plant configuration, the transition or passage between different configurations, more or less similar, may require different times that can be acquired during the various implementation steps of the plant.

The diagram shows, for example, how the transition time is reached (step 20 of figure 2) passing from an end of production with mould A (step 30 of figure 2) to the start of a new production with mould B (step 31 of figure 2).

This transition time A-B (step 20 of figure 2) is automatically detected by the press management software (step 32 of figure 2).

This is followed by a verification step during which it is determined whether this resulting transition time A-B detected is already stored (step or position 33 of figure 2).

On the basis of this transition time obtained there are two possibilities: a first is that the time is already memorized and a second is that this time does not exist.

In the former case, i.e. YES, a step follows (34 in figure 2) in which an average is effected between the last time detected and the transition time already stored, and a new transition time is overwritten.

In the latter case, i.e. NO, a step follows (35 of figure 2) in which the transition time detected is stored in the database as the transition time of that transition A-B.

In both cases, continuing with the procedure, there is a step (36 of figure 2) in which all the transition times of the various possible and detected transitions are organized in a database, which can also contain other updated production data.

The matrix K (incorporated in figure 2) hereunder shows a simple example of a database with all reference transition times for transitions for generic moulds indicated with A, B, C, D, etc.

The transition times are indicated in minutes in the matrix. Furthermore, in this example, among others, the production data are reported with values relating to an average of minutes per production of 10,000 pieces, but other basic parameters for forming the matrix can obviously be indicated.

The ordinate of the matrix shows how it takes 240 minutes to pass from a mould A to a mould B on the abscissa, or to pass from a mould A to a mould C, it takes 170 minutes, from a mould A to a mould D, it takes 120 minutes, etc.

The database is therefore thus constructed thanks to the detection system indicated.

On the basis of these findings and preliminary steps of the method according to the invention, some comparison and optimization examples of the operating sequence can be considered.

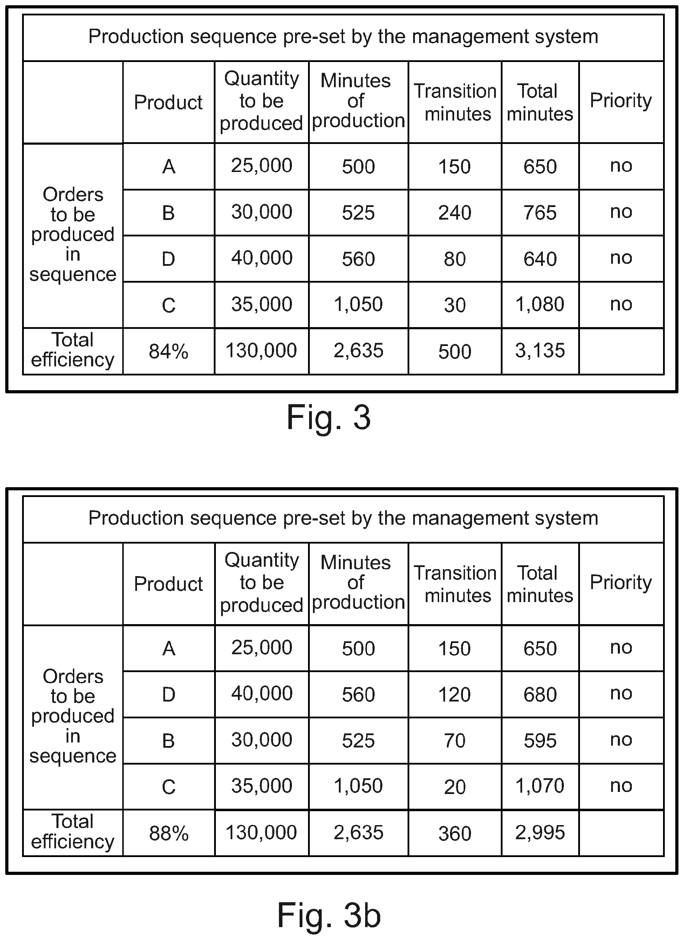

A first example is indicated in the two tables of figures 3 and 3b which show the comparison and optimization of steps of a process for implementing an improved-efficiency deformation and/or moulding plant according to the invention.

In this first comparison and optimization example of the operating sequence it can be noted that, given a production program pre-set by the factory management system, through comparison with the database, the process of the present invention proposes an updated planning.

The first table in figure 3 in fact shows how the company management system requires a certain number of orders to be implemented with moulds A, B, C, D and the quantity of pieces to be produced.

Proceeding according to the management request received, production times by number of pieces and transition times are known from the database. On the basis of this knowledge, it is possible to immediately trace the total minutes in order to create the production sequence received from the management system.

It can be noted, in fact, that to produce a total of 130,000 pieces with the moulds of products A, B, C, D, 2,635 minutes of production are required, plus 500 minutes of transition times for a total of 3,135 minutes.

Using, on the other hand, the process for implementing an improved-efficiency deformation and/or moulding plant according to the invention in accordance with the database of figure 2, the result of what is shown for example in the table of figure 3b is reached.

In this case, the sequence of use of the moulds for the various products has been remodelled on the basis of an optimal distribution of the transition times between the same.

The sequence was selected based on an identification of the lowest transition times as the pre-set request (figure 3) received simply required that the sequence in rotation for producing those pieces and nothing else, be effected.

As an example, specifically, figure 3 shows how the first production step sent by the management software was that of mould A followed by mould B with a transition time A-B of 240 minutes. Figure 3b on the other hand, shows how, with respect to the pre-set sequence of figure 3, the production step with the mould A for the relative product must follow the production step with the mould D of the relative product. This is because the A-D transition time of 120 minutes is the shortest and most convenient, as revealed in the matrix K (incorporated in figure 2) .

By introducing this optimization, it can be seen that the total transition time that emerges from the pre-proposed production sequence is much greater than that which emerges using the process of the present invention. It passes in fact from 500 total minutes to only 360 total minutes.

What is described in the above-mentioned specific example is carried out for all the steps that form the sequence and its repetition, and selects as the optimized sequence that which as a whole guarantees a total use of less time for carrying out the sequence itself and its repetition.

During the processing, the system does not care if a single transition takes longer than the pre-set one, but it is the optimized sequence that as a whole and with its repetition must require less time.

In order to better illustrate the advantage, the assumed production times of the various orders are also added. In this way, an improvement from 84% to 88% in overall efficiency can be noted, due solely to the remodelling of the production sequence re-processed according to the process of the present invention.

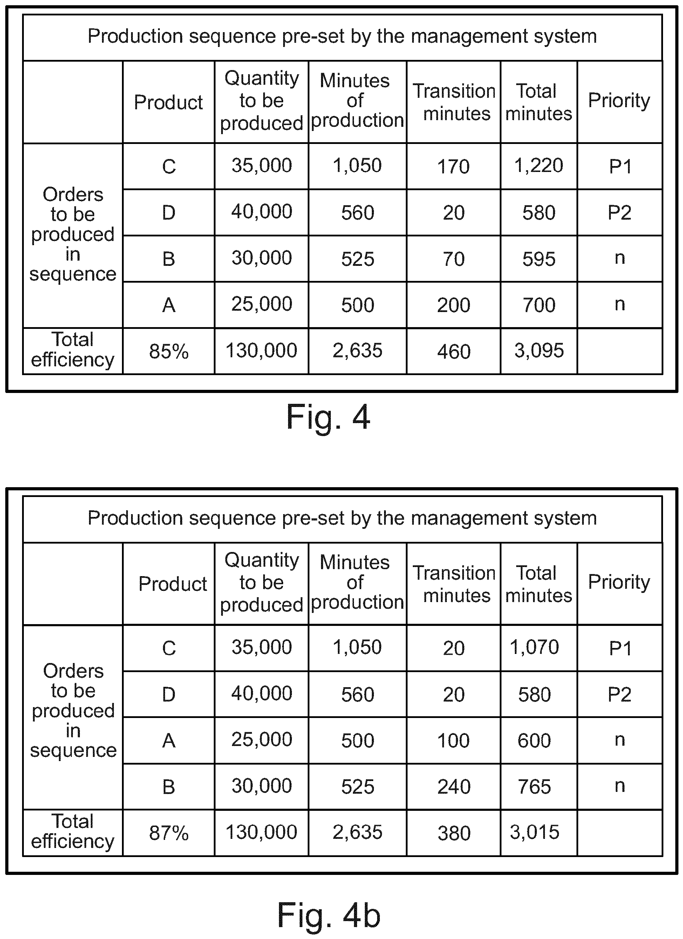

A second example is indicated in the two tables of figures 4 and 4b which show the comparison and optimization of steps of a process for implementing an improved-efficiency deformation and/or moulding plant according to the invention.

In this example, whoever is preparing the business planning sets the priority for one or more products (for example two products indicated in the opposite column as P1 and P2) that must be produced as a priority, without the possibility of changing their succession, as, for example, they are bound to delivery terms.

Figure 4 then shows how the sequence, specifically due to the two priorities set, must be with moulds and/or products C, D, B and A.

And for the moulds and/or products C and D it is not possible to intervene as the implementation of the products obtained from them is only that established with the relative transition times. On the basis of the priorities established, it can be noted that it is only possible to intervene on the sequence in the arrangement of the moulds and/or products B and A.

With the process of the invention, again referring to the plant database (matrix K), it can be noted that the transition time from product B to product C is considerably reduced, i.e. only 20 minutes. And this reduced value is extremely important in the total sum as the sequence sent and received by the management system provided instead for a transition time from product A to product C of 170 minutes.

This variation in the sequence, specifically due to the process of the present invention, allows there to be a total transition time of 380 minutes instead of the 460 minutes predicted on the basis of the preset management system.

Again there is consequently a considerable time saving, thanks to the implementation of the process of the invention.

And as can be seen, in this second comparison and optimization example of the operating sequence, any variables such as the priority for the products of a certain mould, are also taken into account.

Also in this case, the system will re-elaborate and optimize the sequence while maintaining the priorities set. Obviously, the higher the priorities set, the lower the margin will be on which the process can intervene for achieving an optimization.

It has therefore been seen how it is possible to plan their sequence in order to reduce production downtime as much as possible, thus improving the overall efficiency of the plant, with a reduction in costs and an increase in plant availability.

It should also be noted that the database proposed is continuously updated. This is due to the fact that with the functioning of the system, transition times between moulds and/or products already present are continuously detected or transition times between moulds and/or new product products are added.

It is consequently important to observe that the system is constantly "learning", acquiring the transition data, thus improving its experience and therefore the planning quality. If, for example, a certain transition is carried out several times, the system will take into account an average time between those learned, and will also be able to indicate any anomaly, for example if the last implementation has times that differ significantly from its normality.

It does not matter what the data detection system is (more or less automated), nor where the hardware and artificial intelligence software reside (on the press, in the company management system, in claud, by the manufacturer ...).

What is important of this process of the invention is:
- to learn the transition times and gain experience;
- given a pre-set sequence of production requirements, it is modified and optimized based on experience,
- the resulting sequence can always be modified and recalculated efficiently, adapting to external events (operator choices, breakages, etc ...).

All transition times of the various possible transitions are organized in a database and updated with each new detection.

The advantage of this process can be summarized in a production management method which, thanks to the application of artificial intelligence algorithms applied to the electronic management system of the plant (normally that of the press) and to the dialogue (industry 4.0) with the company management system or with a corresponding manual "data entry", is able to improve planning in order to reduce production-change times.

The objective mentioned in the preamble of the description has thus been achieved.

The protection scope of the present invention is defined by the enclosed claims.

## Claims

1. A process for implementing an improved-efficiency deformation and/or moulding plant wherein the plant provides for the use of a plurality of moulds and/or products (A,B,C,D, etc.), which can be continuously updated; said moulds each providing transition times between two consecutive productions which are in relation to successive types of mould and/or product, the process providing for the following successive steps
- detecting the transition times between two productions (position 50) or times for the passage from a first configuration of the press with a first mould for a first product to a second configuration of the press with a second mould or different version of the first mould, for a second product and insertion in a database (k) and so forth for the plurality of moulds and/or products (A,B,C,D,etc.) to be used in the plant,
- sending to the plant, or alternatively manual data entry, a production plan pre-set by a plant management system (53,54) comprising a specific limited series of moulds and/or products (A,B,C,D ,etc.),
- comparing the data relating to said moulds and/or products (A,B,C,D, etc.) and their optimization (position 55) in view of the pre-set plan sent, **characterized in that** said process provides the following step:
- identifying a production sequence in which the sum of the transition times stored in said database (k) for said plurality of moulds and/or products (A,B,C,D, etc.) is minimized by varying the operational production sequence of the plurality of moulds and/or products (A B,C,D, etc.) to be used in the plant.

2. The process according to claim 1, wherein a step is provided, selected by the plant operator (position 57) for implementing or not implementing the proposed sequence identified by the plant, with recalculation of the sequence in the case of denied implementation.

3. The process according to claim 1 or 2, wherein said production plan pre-set by a plant management system (53,54) comprises at least one priority (P1,P2, etc.) for one or more moulds and/ or products (A,B,C,D, etc.) to be used in the plant without the possibility of changing their operational succession and that said identification of a production sequence in which the sum of the transition times between said plurality of moulds and/or products (A,B,C,D, etc.) only relates to those moulds and/or products (A,B,C,D, etc.) indicated as non-priority.

4. The process according to one or more of the previous claims from 1 to 3, wherein said step for detecting the transition times between two productions (position 50) is followed by a verification step during which it is determined whether said resulting transition time detected is already stored (step 33) in the database, followed by:
if already existing, a step (34) wherein an average is effected between the last transition time detected and the transition time already stored, with overwriting of a new transition time,
or if not existing, a step (35) is effected wherein the transition time detected is stored in the database as the transition time of that transition A-B, in both cases, continuing, a step (36) is effected wherein all the transition times of the various possible and detected transitions are organized in said database.

5. The process according to claim 2, wherein the step selected by the plant operator (position 57) with the implementation or otherwise of the proposed sequence, is followed by:
if the plant operator agrees with this proposal, he allows the operational phase or the implementation of the sequence (step 60), or
if the plant operator does not agree with this proposal, an alternative sequence of steps is presented in which the sequence is recalculated, proposing the most convenient sequence for future configurations.

6. The process according to claim 5, wherein steps are subsequently effected wherein the operator begins the implementation of a new data comparison and optimization (step 59) before returning again to step (56) having identified a new optimized production sequence.
